# EUROPEAN PATENT APPLICATION

(11) **EP 3 709 191 A1**
(43) Date of publication of application: **16.09.2020**
(21) Application number: 19162384.2
(22) Date of filing: 12.03.2019
(51) Int. Cl.: G06F 16/26, G06F 16/248

(54) **APPARATUS AND METHOD FOR VISUALIZING AND OPERATING ON LARGE DATA SETS ACCESSIBLE VIA A GRAPH**

(71) Applicant: Nokia Technologies Oy, 02610 Espoo (FI)
(72) Inventor: ERMAN, Bilgehan, Weehawken, New Jersey 07086 (US)
(74) Representative: Swindell & Pearson Limited

(57) **Abstract**

An apparatus and method for processing a data set based on received input of one or more search criterion, wherein the data set is a set of data accessible via a graph comprising nodes including a root node, wherein a hierarchical level of a node is determined by a number of nodes in a shortest route through the graph from the node to the root node and is highest at the root node. The processing results in the display of a user-interactive visual representation of the data set as a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels. The visual representation comprises at least a line of one or more items spread within the corresponding layer in a direction parallel to the second direction , to represent first nodes that are in the corresponding hierarchical level and which are access points to data which matches the one or more search criterion, and uses at least a stack of items stacked in a direction parallel to the third direction , in the corresponding layer, to represent second nodes that are in the hierarchical level, the second nodes being access points to data that are not first nodes but which have a same or higher hierarchical level as a first node, such that there is an item and/or a stack of items at each node in a shortest route through the graph from each first node to the root node.

## Description

### TECHNOLOGICAL FIELD

Embodiments of the present disclosure relate to operating on data within large data sets in response to user input commands.

### BACKGROUND

It is very difficult for a user to use a large data set to perform operations. The sheer quantity of the data obscures the data that should be operated on.

It would be desirable to provide a visual representation of a data set that allows a user to find relevant data within the data set on which to perform an operation.

### BRIEF SUMMARY

According to various, but not necessarily all, embodiments there is provided anapparatus comprising means for:
receiving input of one or more search criterion;
processing a data set based on the received input one or more search criterion
   wherein the data set is a set of data accessible via a graph comprising nodes including a root node, wherein a hierarchical level of a node is determined by a number of nodes in a shortest route through the graph from the node to the root node and is highest at the root node, and
   wherein the processing classifies nodes, based on the received input one or more search criterion, as first nodes or second nodes
   wherein the first nodes are access points to data that is determined to be a search match for the received input one or more search criterion and
   wherein the second nodes are access points to data, are not first nodes and have a same or higher hierarchical level as a first node;
causing display of a user-interactive visual representation of the data set wherein the user-interactive visual representation of the data set is a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels,
wherein the three-dimensional structure, for each hierarchical level:
   uses at least a line of one or more items, in the corresponding layer, to represent first nodes that are in the hierarchical level, wherein the line of items is spread within the corresponding layer in a direction parallel to the second direction, wherein each of the first nodes that are in the hierarchical level has a corresponding item in the line of items,
   uses at least a stack of items, in the corresponding layer, to represent second nodes that are in the hierarchical level wherein the stack of items are items stacked within the corresponding layer in a stacking direction parallel to the third direction; and wherein there is an item and/or a stack of items at each node in a shortest route through the graph from each first node to the root node.

In some but not necessarily all examples, the means for receiving input of one or more search criterion comprises means for inputting unstructured text comprising one or more identifiers present in the data set and associated with nodes, and means for extracting the one or more identifiers from the unstructured text and using them as the one or more search criterion.

In some but not necessarily all examples, the means for inputting unstructured text enables a user to drag-and-drop or cut-and-paste the unstructured text or an object defining the unstructured text.

In some but not necessarily all examples, the apparatus comprises means for storing identifiers of the first nodes as anchor points for reproducing the two-dimensional representation.

In some but not necessarily all examples, the apparatus comprises means for controlling the two-dimensional representation of the three-dimensional structure so that the three-dimensional structure is rotated in space.

In some but not necessarily all examples, the apparatus comprises means for enabling a user to convert a stack of items stacked in the third direction to a line of items spread in a direction parallel to the second direction, and for enabling the user to covert the line of items back into the stack of items.

In some but not necessarily all examples, the apparatus comprises means for enabling a user to select an item and cause display of at least some of the data accessible via the node represented by the selected item and display of one or more options for using the data accessible via the node represented by the selected item to perform one or more functions.

In some but not necessarily all examples, the apparatus comprises means for using the data accessible via the node represented by the selected item to automatically populate a recipient field of an email.

In some but not necessarily all examples, the apparatus comprises means for enabling a user to display at least some of the data associated with a first node represented by an item in the line of items without selecting the item.

In some but not necessarily all examples, the apparatus comprises means for: accessing other data that is a different collection of data than the data set; identifying nodes that are access points to data that matches the other data; and visually flagging an item representing the identified node.

In some but not necessarily all examples, the apparatus comprises means for enabling a user to select a visually flagged item within a stack of items and cause display of at least some of the other data matching
the data accessible via the node represented by the visually flagged item.

In some but not necessarily all examples, each item is a two-dimensional item that extends parallel to the first direction and the second direction but does not extend or extend significantly parallel to the third direction.

In some but not necessarily all examples, the item is a two-dimensional rectangular card that has first parallel edges that are parallel to the first direction, second parallel edges that are parallel to the second direction and corners where the first parallel edges and the second parallel edges meet, wherein the stacked items are a stack of the cards viewed from a perspective such that corners of the cards in the stack are aligned parallel to the third direction.

According to various, but not necessarily all, embodiments there is provided a method comprising:
receiving input of one or more search criterion;
processing a data set based on the received input one or more search criterion wherein the data set is a set of data accessible via a graph comprising nodes including a root node, wherein a hierarchical level of a node is determined by a number of nodes in a shortest route through the graph from the node to the root node and is highest at the root node, and wherein the processing classifies nodes, based on the received input one or more search criterion, as first nodes or second nodes wherein the first nodes are access points to data that is determined to be a search match for the received input one or more search criterion and wherein the second nodes are access points to data that are not first nodes and which have a same or higher hierarchical level as a first node;
causing display of a user-interactive visual representation of the data set wherein the user-interactive visual representation of the data set is a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels,
wherein the three-dimensional structure, for each hierarchical level:
   uses a line of one or more items, in the corresponding layer, to represent first nodes that are in the hierarchical level, wherein the line of items is spread within the corresponding layer in a direction parallel to the second direction, wherein each of the first nodes that are in the hierarchical level has a corresponding item in the line of items,
   uses at least a stack of items, in the corresponding layer, to represent second nodes that are in the hierarchical level wherein the stack of items are items stacked within the corresponding layer in a stacking direction parallel to the third direction; and
   wherein there is an item or a stack of items at each node in a shortest route through the graph from each first node to the root node.

According to various, but not necessarily all, embodiments there is provided a computer program comprising program instructions for causing an apparatus to perform at least the following:
receiving input of one or more search criterion;
processing a data set based on the received input one or more search criterion
   wherein the data set is a set of data accessible via a graph comprising nodes including a root node, wherein a hierarchical level of a node is determined by a number of nodes in a shortest route through the graph from the node to the root node and is highest at the root node, and
   wherein the processing classifies nodes, based on the received input one or more search criterion, as first nodes or second nodes
   wherein the first nodes are access points to data that is determined to be a search match for the received input one or more search criterion and
   wherein the second nodes are access points to data that are not first nodes and which have a same or higher hierarchical level as a first node;
causing display of a user-interactive visual representation of the data set wherein the user-interactive visual representation of the data set is a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels,
wherein the three-dimensional structure, for each hierarchical level:
   uses at least a line of one or more items, in the corresponding layer, to represent first nodes that are in the hierarchical level, wherein the line of items is spread within the corresponding layer in a direction parallel to the second direction, wherein each of the first nodes that are in the hierarchical level has a corresponding item in the line of items,
   uses at least a stack of items, in the corresponding layer, to represent second nodes that are in the hierarchical level wherein the stack of items are items stacked within the corresponding layer in a stacking direction parallel to the third direction; and wherein there is an item and/or a stack of items at each node in a shortest route through the graph from each first node to the root node.

According to various, but not necessarily all, embodiments there is provided examples as claimed in the appended claims.

### BRIEF DESCRIPTION

Some example embodiments will now be described with reference to the accompanying drawings in which:
FIG. 1 shows an example embodiment of the subject matter described herein;
FIG. 2 shows another example embodiment of the subject matter described herein;
FIG. 3 shows another example embodiment of the subject matter described herein;
FIG. 4A, 4B show other example embodiments of the subject matter described herein;
FIG. 5A and 5B show another example embodiment of the subject matter described herein;
FIG. 6A and 6B show another example embodiment of the subject matter described herein;
FIG. 7A, 7B, 7C show other example embodiments of the subject matter described herein;
FIG. 8 shows another example embodiment of the subject matter described herein;
FIG. 9A shows another example embodiment of the subject matter described herein;
FIG. 9B shows another example embodiment of the subject matter described herein;
FIG. 10A and 10B show another example embodiment of the subject matter described herein;
FIG. 11A and 11B show another example embodiment of the subject matter described herein;
FIG. 12 shows another example embodiment of the subject matter described herein;
FIG. 13 shows another example embodiment of the subject matter described herein.

### DETAILED DESCRIPTION

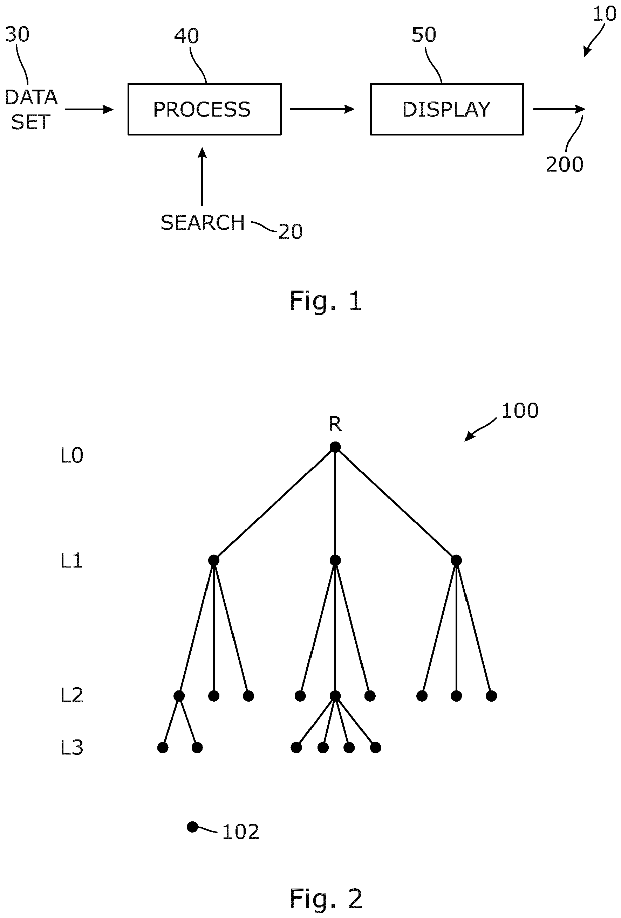

FIG 1 illustrates an example of an apparatus 10 for displaying a user-interactive visual representation 200 of a data set 30. The apparatus comprises means for receiving input of one or more search criterion 20; processing a data set 30 based on the received input one or more search criterion 20 and causing display 50 of a user-interactive visual representation 200 of the data set 30. The data set 30 is a set of data accessible via a graph 100, for example as illustrated in FIG 2.

In some but not necessarily all examples, the input one or more search criterion 20 are user-input one or more search criterion 20 that are input by a user, for example using an input device.

An example of the data set 30 is illustrated in FIG 2. The data set 30 is a set of data accessible via a graph 100. Each node 102 in the graph 100 provides an access point to access data within the data set 30. The graph 100 comprises nodes 102 including a root node R. A hierarchical level L(n) of a node 102 is determined by a number of nodes 102 in a shortest route through the graph 100 from the node 102 to the root node R. The root node has the highest hierarchical level L0, the next highest level is L1, the next highest level is L2, etc.

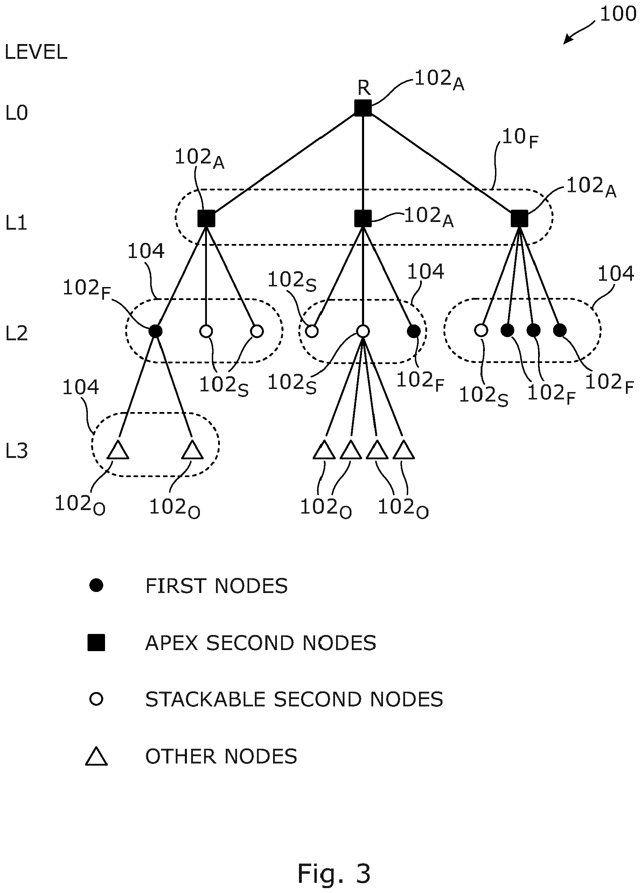

As illustrated in FIG 3, the processing of the data set 30 classifies nodes 102, based on the received input one or more search criterion 20 as first nodes 102_{F} or second nodes 102. The first nodes 102_{F} are access points to data that is determined to be a search match for the received input one or more search criterion 20. The second nodes 102 are access points to data that are not first nodes 102_{F} and which have a same or higher hierarchical level L(n) as a first node 102_{F}.

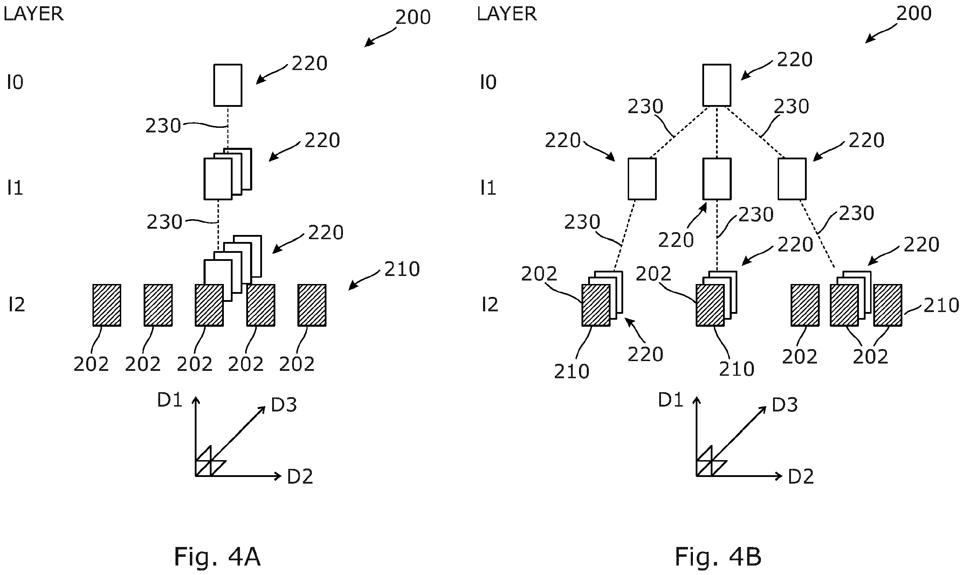

FIG 4A and FIG 4B illustrate different displayed user-interactive visual representations 200 of the data set 30 that has been processed as illustrated in FIG 3. The user-interactive visual representation 200 of the data set 30 is a two-dimensional representation of a three-dimensional structure. The three-dimensional structure extends in a first direction D1, a second direction D2 and a third direction D3. The first direction D1, the second direction D2 and the third direction D3 are mutually orthogonal directions in the three-dimensional space occupied by the three-dimensional structure. The three-dimensional structure has a series of adjacent layers l(n). Each layer l(n) corresponds to a hierarchical level L(n) of the graph 100, where n can have a different index value. An ordering of the series of adjacent layers l(n) is in the first direction D1 and corresponds to an ordering of the hierarchical levels L(n).

The three-dimensional structure, for each hierarchical level L(n) :
a) uses at least a line 210 of one or more items 202, in the corresponding layer l(n), to represent first nodes 102_{F} that are in the hierarchical level L(n), wherein the line 210 of items 202 is spread within the corresponding layer l(n) in a direction parallel to the second direction D2, wherein each of the first nodes 102_{F} that are in the hierarchical level L(n) has a corresponding item 202 in the line 210 of items 202, and
b) uses at least a stack 220 of items 202, in the corresponding layer l(n), to represent second nodes 202 that are in the hierarchical level L(n) wherein the stack 220 of items 202 are items 202 stacked within the corresponding layer l(n) in a stacking direction parallel to the third direction D3. There is an item 202 and/or a stack 220 of items 202 for each node 102 in a shortest route through the graph 100 from each first node 102_{F} to the root node R.

It will be appreciated by comparing FIG 3 to FIGS 4A and 4B that not every node 102 has a corresponding item. Those nodes 102_{O} that are in hierarchical layers beneath any first node 102_{F} are not represented in a line 210 of items 202 or in a stack 220 of items 202 in the user-interactive visual representation 200 of the data set 30.

It should be appreciated that the data set 30 that is processed 40 may be a part of a larger data set or may be the whole of a data set. The processing encompasses classification being operative on a whole of a data set or a part of a data set.

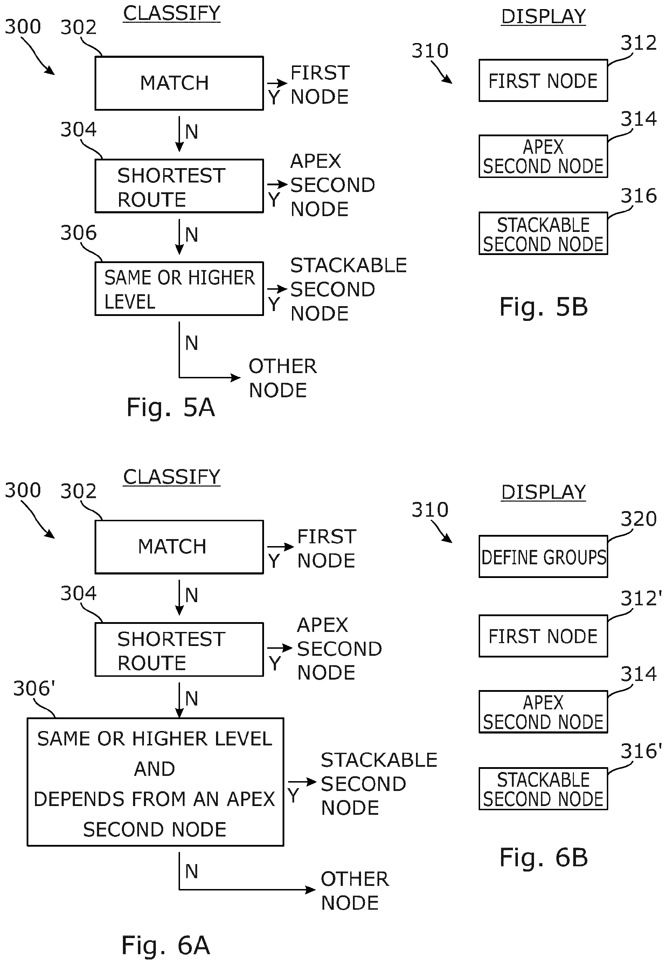

FIG 5A illustrates an example of a method 300 that is suitable for classifying nodes 102, based on the received input one or more such criterion 20, as first nodes or second nodes. The method 300 classifies a node 102 as follows:
If the node 102, in hierarchical level L(n), is an access point to data that matches the one or more search criterion 20, then the node 102 is labelled 302 as a first node 102_{F} for the hierarchical level L(n).
Else, if the node is an access point to data that does not match the one or more search criterion 20, that is, it misses the one or more search criterion 20, then the node 102 is labelled an 'other' node 102_{O}.
If the 'other' node 102_{O} is in a shortest route from a first node 102_{F} to the root node R then it is relabeled 304 as an apex second node 102_{A} else, if the 'other' node is in the same or higher hierarchical level as a first node 102_{F} then it is relabeled 306 as a stackable second node 102_{S}, else the 'other' node remains labelled as an 'other' node 102_{O}.

FIG 5B illustrates an example of a method 310 for displaying the user-interactive visual representation 200 of the data set 30.

If a node 102 is a first node 102_{F} in a hierarchical level L(i) then, at block 312, a corresponding item 202 is placed in a line 210 for the corresponding layer l(i) in the three-dimensional structure that is represented by the user-interactive visual representation 200 of the data set 30.

If a node 102 is an apex second node 102_{A} for a hierarchical level L(j) then, at block 314, a corresponding item 202 is placed at the head of a stack 220 (if there are any additional stacked items 202) for the corresponding level l(j).

If the node 102 is a stackable second node 102_{S} in a hierarchical level L(k) then, at block 316, a corresponding item 202 is placed in a stack 220 of items 202 for the corresponding layer l(k).

The method 300, 310 described in relation to FIG 5A and 5B can, for example, be used to generate the user-interactive visual representation 200 illustrated in FIG 4A.

Similar methods to those described in relation to FIGS 6A and 6B can be used to generate the user-interactive visual representations 200 illustrated in both FIG 4A and FIG 4B. For the purpose of these methods, there is defined 310 a group 104 of nodes 102. A group 104 of nodes 102 are nodes that depend directly from the same node at a higher hierarchical level. Some examples of groups of nodes are illustrated in FIG 3.

FIG 6A illustrates an example of a method 300 that is suitable for classifying nodes 102, based on the received input one or more such criterion 20, as first nodes or second nodes. The method 300 classifies a node 102 as follows:
If the node 102, in hierarchical level L(n), is an access point to data that matches the one or more search criterion 20, then the node 102 is labelled 302 as a first node 102_{F} for the hierarchical level L(n).
Else, if the node is an access point to data that does not match the one or more search criterion 20, that is, it misses the one or more search criterion 20, then the node 102 is labelled an other node 102_{O}.
If the other node 102_{O} is in a shortest route from a first node 102_{F} to the root node R then it is relabeled 304 as an apex second node 102_{A} else,
if the other node is in the same or higher hierarchical level as a first node 102_{F} AND the other node depends from an apex second node 102_{A} then it is relabeled 306' as a stackable second node 102_{S},
else the other node remains labelled as an other node 102_{O}.

FIG 6B illustrates an example of a method 310 for displaying the user-interactive visual representation 200 of the data set 30.

If a node 102 is a first node 102_{F} in a hierarchical level L(i) then, at block 312', a corresponding item 202 is placed in a line 210 for the corresponding layer l(i) in the three-dimensional structure that is represented by the user-interactive visual representation 200 of the data set 30. The different groups 104 of first nodes 102_{F} are represented by different lines 210 of items, even within the same layer. Each different line 210 of items for a group is placed under the item 202 corresponding to the shared node of the group 104 (the node from which the members of the group depend). There may be one or more items 202 in a line 210 of items.

If a node 102 is an apex second node 102_{A} for a hierarchical level L(j) then, at block 314, a corresponding item 202 is placed at the head of a stack 220 (there may or may not be additional stacked items 202) for the corresponding level l(j).

If the node 102 is a stackable second node 102_{S} in a hierarchical level L(k) then, at block 316', a corresponding item 202 is placed in a stack 220 of items 202 for the corresponding layer l(k). The different groups 104 of second nodes 102_{S} are represented by different stacks 220 of items 202, even within the same layer l(k). Each different stack 220 of items 202 for a group 104 is placed under the item 202 corresponding to the shared node of the group 104 (the node from which the members of the group depend). The same stack 220 is used for stackable nodes 102_{S} of the same group 104.

At a level l(k), for a set of first nodes 102_{F} and stackable 102ₛ nodes that are part of the same group 104, the stack of 220 items 202 may be placed at any one of the items 202 for the nodes of the group 104.

Thus, for example, in the situation where the data set 30 is a data set for a company's organization that is arranged in a graph 100 that represents the reporting structure of staff to managers, and the input one or more search criterion is a criteria that identifies some subset of people within the organization, then the processing of the data set based on the received input one or more search criterion 20 causes display of a user-interactive visual representation 200 that would show the people that matched the search as respective items 202 in one or more lines 210, the manager of each of these individuals and the managers in the reporting line from the individual up to the CEO at the root would be represented by an item at the front of a stack 220 (which may be a single item stack or a multi-item stack). Other people who report to the manager would be represented as items in the stack of items behind the item representing the manager.

The data set/representation can be used for things other than organizations, for example, network configuration data and taxonomy of biological species.

It will be appreciated that the visual representations 200 illustrated in FIGS 4A and 4B are visual representations that correspond to the classified graph 100 illustrated in FIG 3.

Referring to FIG 3, the second nodes 102_{A}, 102_{S} are access points to data that are not first nodes 102_{F} and which have a same or higher hierarchical level L(n) and additionally dependent from a node 102_{A} in a shortest route from a first node 102_{F} to the root node R.

Referring to FIGS 4A and 4B, the three-dimensional structure presented by the visual representation 200 of the data set 30 has the following arrangement for each hierarchical level L(n) of the graph 100 for the data set 30 and the corresponding layer l(n) of the visual representation 200. There is a different line 210 of one or more items 202, in the corresponding layer l(n), to represent each group 104 of first node 102_{F} that are in the corresponding hierarchical level L(n). Each different line 104 of first items 202 is spread within the corresponding layer l(n) in a direction parallel to the second direction D2. Each of the first nodes 102_{F} that are in the hierarchical level L(n) has a corresponding item 202 in a line 210 of items 202 in the corresponding layer L(n).

There is a different stack 220 of items 202, in the corresponding layer l(n) to represent each different group 104 of second nodes 102_{A}, 102_{S} that are in the hierarchical level L(n). Each stack 220 of items 202 comprises items 202 stacked within a corresponding layer L(n) in a stacking direction parallel to the third direction D3.

Referring to FIG 3, it can be observed that nodes in a particular group 104 depend directly from the same common node at a higher hierarchical level. Referring back to FIGS 4A and 4B, it can be observed that the visual representations 200 have a different line 210 of items 202 for each different group 104 that comprises first nodes 102_{F}. There is an item 202 in a line 210 associated with a group 104 for each first node 102_{F} in the associated group 104. Items 202 in the visual representation 200 in a particular layer l(n) each has a corresponding node 102 in a corresponding hierarchical level L(n) of the graph 100. Each line 210 of items 202 corresponding to first nodes 102_{F} is placed under (adjacent in the first direction D1) an item 202 that corresponds to the common node of the group 104 associated with that line 210 of items 202. Optionally, a visual indication 230 can be displayed to indicate an association between a line 210 of items 202 for a group of first nodes 102_{F} and an item 210 that corresponds to the common node of 102_{A}, 102_{F} of that group 104 or the association can be established by other means such as grouping via proximity in the visual representation 200.

There is a different stack 220 of items 202 for each different group 104 that comprises a second node 102_{A}, 102_{S}. There is an item 202 in each stack 220 associated with a group 104 for each second node 102_{A}, 102_{S} in that associated group. Each stack 220 of items 202 is placed under (adjacent in the first direction D1) an item 202 that corresponds to the common node of the group 104 associated with that stack 220 of items 202. Each stack 220 of items 202 is placed behind (further into the three-dimensional structure in a direction D3) a line 210 of items 202 (if any) that is for the same group 104 as the stack 220.The stack 220 may be placed behind any one of items 202 if there are two or more within the same group 104.

The items 202 in a stack of items 220 are, in some examples, ordered. The item 202 corresponding to an apex second node 102_{A} for a group 104 is presented on top of the stack 220 of items 202 for that group 104 so that it is most clearly visible. If there are multiple second apex nodes for a group, then the items corresponding to the multiple apex second node 102_{A} for that group 104 can be presented as a line of items 202 in the second direction D2 on top of the stack 220 of items 202 for that group 104 (if any).

If there is no matching node 102 in a group 104, that group is not going to be represented at all in the visual representation 200 unless it is in a shortest route through the graph 100 from a first node 102_{F} to the root node R.

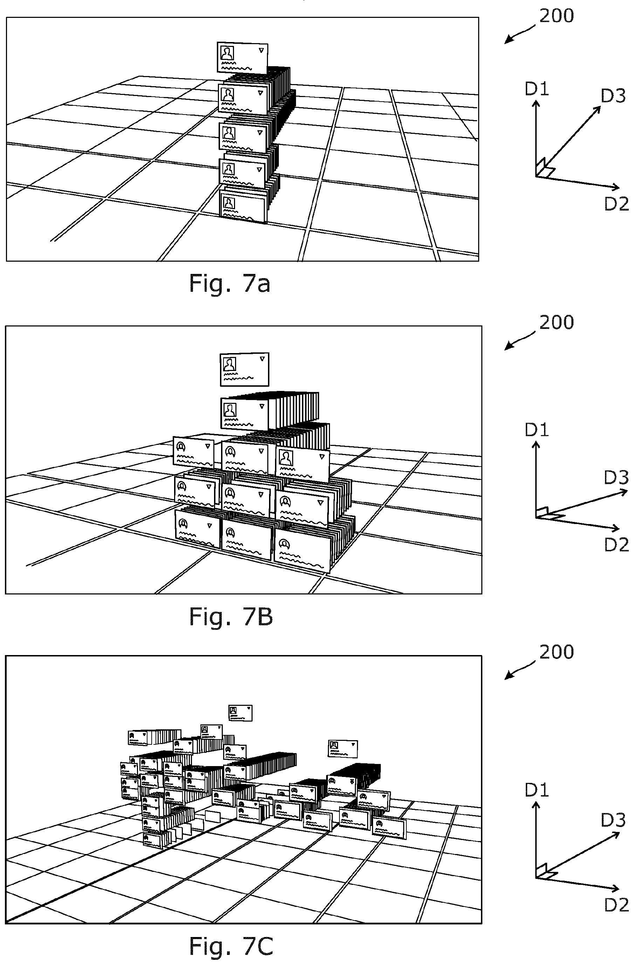

FIGS 7A to 7C illustrate some examples of different visual representations 200 as previously described. In these examples each stack 220 of items 202 represent stackable second nodes 102_{S} in the same group 104. Lead items on a stack 220 represent an apex second node 102_{A} for the group. First nodes 102_{F} in a group 104 are represented by a line 210 of items 202. Each item 202 represents a node 102, however, each node 102 is not represented as an item 202. Each item 202 is in a layer l(n) of the visual representation 200 that corresponds to a level L(n) of the graph 100 that is occupied by the node 102 represented by that item 202.

In the example of FIG 7A, there is a stack 220 of items 202 for each node 102 in a shortest route through the graph 100 from a first node 102_{F}, at the bottom of the graph, to the root node R at the top of the graph.

In the examples illustrated in FIG 7B and 7C, there is an item 202 with or without an accompanying stack 220 of items 202 at each node 102 in a shortest route through the graph 100 from each first node 102_{F} to the root node R. There are three first nodes 102_{F} that are represented by the three items at the bottom of the visual representation 200. In this example, the item 202 for each node 102 in the shortest route through the graph 102 from each first node 102_{F} represents an apex second node 102_{A} and the stack of items 220 are for stackable second nodes 102_{S}.

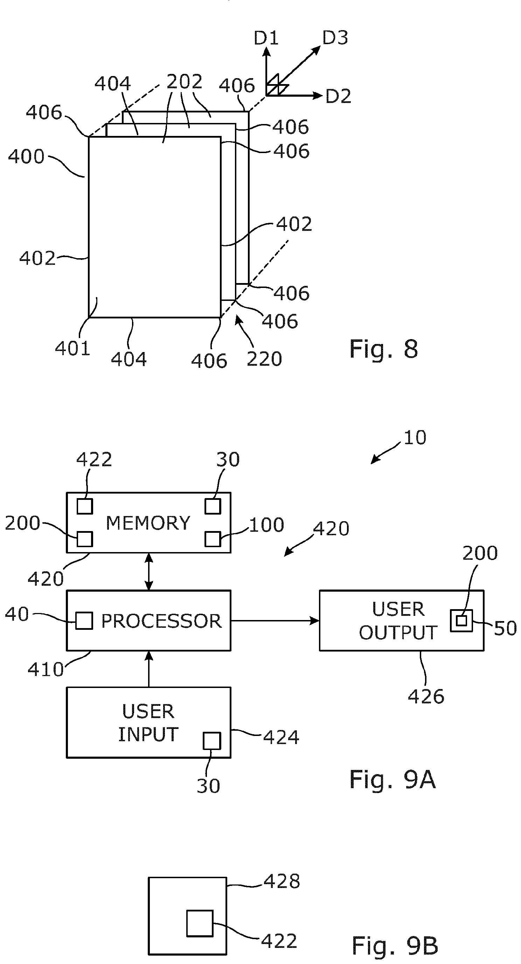

FIG 8 illustrates an item 202 and also a stack 220 of items 202. In FIG 8, each item 202 is a two-dimensional item that extends parallel to the first direction D1 and the second direction D2 but does not extend or extend significantly parallel to the third direction D3. In this example, each item 202 is a two-dimensional rectangular card 400. Each card 400 is of the same size. The cards can present different information on a face and may have different visual attributes. This may be useful to, for example, indicate what data can be accessed via the card 400. As the card 400 is an item 202, it represents a corresponding node 102 in the graph 100 and that corresponding node is an access point to data. Some or all of that data may be represented on a face 401 of the card 400. Different visual indications may be applied to the card 400 to indicate whether it represents a first node 102_{F}, or a second node 102_{A}, 102_{S}. Visual indications may also be used to differentiate an apex second node 102_{A} from a stackable second node 102_{S}. Instead of a card, an embodiment may use other two-dimensional or three-dimensional geometric representations.

The rectangular card 400 has first parallel edges 402 that are parallel to the first direction D1, second parallel edges 404 that are parallel to the second direction D2 and corners 406 where the first parallel edges 402 and the second parallel edges 404 meet. Where the items 202 form a stack 220 there is a stack of cards 400 viewed from a perspective such that corners 406 of the cards 400 in the stack 220 are aligned parallel to the third direction D3.

FIG 9A illustrates an example of an apparatus 10 as previously described. The apparatus comprises means 424 for receiving user-input of one or more search criterion 30; processing means 40 for processing a data set 30 based on the received user-input one or more search criterion 30 wherein the data set 30 is a set of data accessible via a graph 100; and means 50 for causing display of a user-interactive visual representation 200 of the data set 30.

In this example, the apparatus 10 comprises a controller 420, one or more user input devices 424 and one or more user output devices 426.

The one or more user input devices 424 may be any suitable user input devices. The user input device 424 is configured to enable a user to input the one or more search criterion 30. It may also be configured to enable a user to provide user input commands to the apparatus 10 that enable the user to interact with the visual representation 200 of the data set 30.

The user output device or devices 426 may comprise any suitable user output devices such as visual output devices or audio output devices. It includes a display or an output port to a display that is configured to enable the display of the visual representation 200 of the data set 30.

The controller 420 receives input from the user input device or devices 424 and provides output to the one or more user output devices 426.

FIG 9A illustrates an example of a controller 420. Implementation of a controller 420 may be as controller circuitry. The controller 420 may be implemented in hardware alone, have certain aspects in software including firmware alone or can be a combination of hardware and software (including firmware).

As illustrated in FIG 9A the controller 420 may be implemented using instructions that enable hardware functionality, for example, by using executable instructions of a computer program 422 in a general-purpose or special-purpose processor 410 that may be stored on a computer readable storage medium (disk, memory etc) to be executed by such a processor 410.

The processor 410 is configured to read from and write to the memory 420. The processor 410 may also comprise an output interface via which data and/or commands are output by the processor 410 and an input interface via which data and/or commands are input to the processor 410.

The memory 420 stores a computer program 422 comprising computer program instructions (computer program code) that controls the operation of the apparatus 10 when loaded into the processor 410. The computer program instructions, of the computer program 422, provide the logic and routines that enables the apparatus to perform the methods illustrated and/or described in this document. The processor 410 by reading the memory 420 is able to load and execute the computer program 422.

The apparatus 10 therefore comprises:
at least one processor 410; and
at least one memory 420 including computer program code the at least one memory 420 and the computer program code configured to, with the at least one processor 410, cause the apparatus 10 at least to perform:
   receiving user-input of one or more search criterion;
   processing a data set based on the received user-input one or more search criterion
      wherein the data set is a set of data accessible via a graph comprising nodes including a root node, wherein a hierarchical level of a node is determined by a number of nodes in a shortest route through the graph from the node to the root node and is highest at the root node, and
      wherein the processing classifies nodes, based on the received user-input one or more search criterion, as first nodes or second nodes wherein the first nodes are access points to data that is determined to be a search match for the received user-input one or more search criterion and
      wherein the second nodes are access points to data that are not first nodes and which have a same or higher hierarchical level as a first node;
   causing display of a user-interactive visual representation of the data set wherein the user-interactive visual representation of the data set is a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels,
   wherein the three-dimensional structure, for each hierarchical level:
      uses at least a line of one or more items, in the corresponding layer, to represent first nodes that are in the hierarchical level, wherein the line of items is spread within the corresponding layer in a direction parallel to the second direction, wherein each of the first nodes that are in the hierarchical level has a corresponding item in the line of items,
      uses at least a stack of items, in the corresponding layer, to represent second nodes that are in the hierarchical level wherein the stack of items are items stacked within the corresponding layer in a stacking direction parallel to the third direction; and wherein there is an item and/or a stack of items at each node in a shortest route through the graph from each first node to the root node.

As illustrated in FIG 9B, the computer program 422 may arrive at the apparatus 10 via any suitable delivery mechanism 428. The delivery mechanism 428 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 422. The delivery mechanism may be a signal configured to reliably transfer the computer program 422. The apparatus 10 may propagate or transmit the computer program 422 as a computer data signal.

Computer program instructions for causing an apparatus to perform at least the following or for performing at least the following:
receiving user-input of one or more search criterion;
processing a data set based on the received user-input one or more search criterion
   wherein the data set is a set of data accessible via a graph comprising nodes including a root node, wherein a hierarchical level of a node is determined by a number of nodes in a shortest route through the graph from the node to the root node and is highest at the root node, and
   wherein the processing classifies nodes, based on the received user-input one or more search criterion, as first nodes or second nodes
   wherein the first nodes are access points to data that is determined to be a search match for the received user-input one or more search criterion and
   wherein the second nodes are access points to data that are not first nodes and which have a same or higher hierarchical level as a first node;
causing display of a user-interactive visual representation of the data set wherein the user-interactive visual representation of the data set is a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels,
wherein the three-dimensional structure, for each hierarchical level:
   uses at least a line of one or more items, in the corresponding layer, to represent first nodes that are in the hierarchical level, wherein the line of items is spread within the corresponding layer in a direction parallel to the second direction, wherein each of the first nodes that are in the hierarchical level has a corresponding item in the line of items,
   uses at least a stack of items, in the corresponding layer, to represent second nodes that are in the hierarchical level wherein the stack of items are items stacked within the corresponding layer in a stacking direction parallel to the third direction; and wherein there is an item and/or a stack of items at each node in a shortest route through the graph from each first node to the root node.

The computer program instructions may be comprised in a computer program, a non-transitory computer readable medium, a computer program product, a machine readable medium. In some but not necessarily all examples, the computer program instructions may be distributed over more than one computer program.

Although the memory 420 is illustrated as a single component/circuitry it may be implemented as one or more separate components/circuitry some or all of which may be integrated/removable and/or may provide permanent/semi-permanent/ dynamic/cached storage.

Although the processor 410 is illustrated as a single component/circuitry it may be implemented as one or more separate components/circuitry some or all of which may be integrated/removable. The processor 410 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the included FIGs may represent steps in a method and/or sections of code in the computer program 422. The illustration of a particular order to the blocks does not necessarily imply that there is a required or preferred order for the blocks and the order and arrangement of the block may be varied. Furthermore, it may be possible for some blocks to be omitted.

The visual representation 200 of the data set 30 is a user-interactive visual representation 200. This means that the user can interact with the visual representation 200 via the user input device 424. This interaction can, for example, be used to provide commands to the apparatus 10 to change the visual representation 200 and/or to use the visual representation 200 as a command and control menu to cause the apparatus 10 to perform functions under the command and control of the user. For example, such command and control functions may, for example, be enabling the user to communicate with a third party associated with an item 202 in the visual representation 200 that is selected by the user using the user input device 424.

In the following examples, the user input device 424 is a mouse or other cursor control device that is used to move a cursor within the displayed visual representation 200. The cursor can be used with a click action to select an item 202 or element. The cursor can be used with a click and drag action to select the three-dimensional structure represented by the visual representation 200.

For example, by clicking and holding the visual representation 200, the user in effect selects the three-dimensional structure represented by the visual representation 200 and can rotate the visual representation 200 changing the orientation of the directions D1, D2, D3 or any one or more of these directions. For example, the user can cause the three-dimensional structure to pitch by rotating about the direction D2, to yaw by rotating it about the direction D1 and to roll by rotating it about the direction D3. In some examples, it may only be possible to apply a yaw to the three-dimensional structure by rotating it about the direction D1. The apparatus 10 therefore comprises means for controlling the two-dimensional representation 200 of the three-dimensional structure so that the three-dimensional structure is rotated in space.

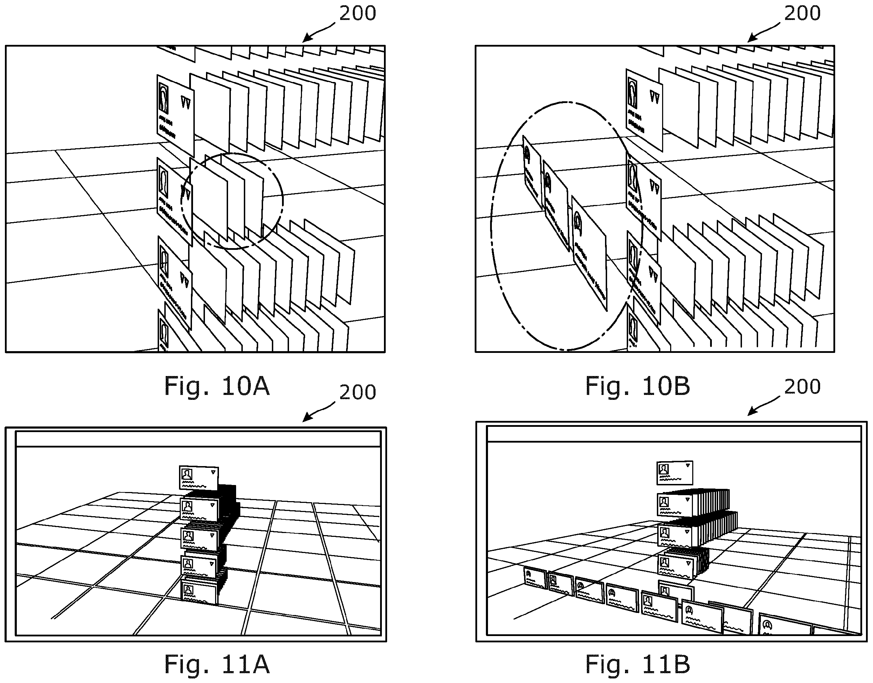

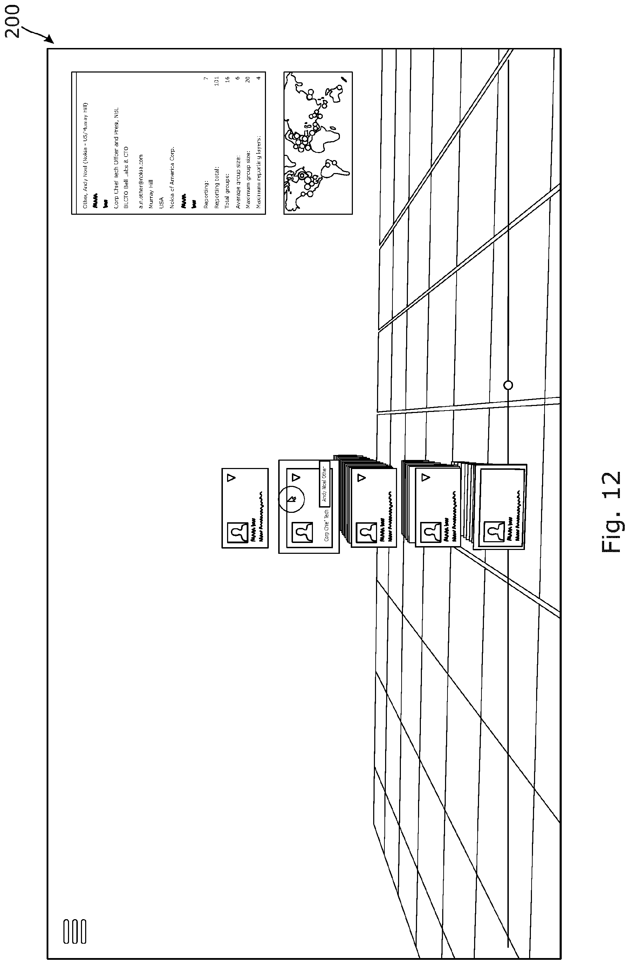

This rotation can, for example, be visualized by comparing the visual representations 200 illustrated in FIGS 10A and 10B with those illustrated in FIGS 11A, 11B and 12.

The apparatus 10 is also configured to enable the user to interact with the visual representation 200 to convert a stack 220 of items 202 that are stacked in the third direction D3 into a line 210 of items 202 spread in a direction parallel to the second direction D2. The apparatus 10 also enables the user to interact with the visual representation 200 to enable the user to convert that line 210 of items 202 back into a stack 220 of items. An example of this is illustrated in FIGS 10A and 10B.

The user clicks anywhere on the stack 202 highlighted in FIG 10A. This causes that stack 220 of items 202 to be presented as a line 210 of items 202 spread in the second direction D2 as illustrated in FIG 10B. It will be appreciated that in this example the top item 202 of the stack 220 that corresponds to an apex second node 102A is not included in the line 210 of items 202 that is newly spread in the second direction D2.

The line 210 of items 202 that is newly spread in the direction D2 comprises items that are associated with stackable second nodes 102_{S}.

The apparatus 10 comprises means for enabling a user to select a stack 220 of items 202 representing the second node, for example the second stackable node 102_{S}, and thereby cause at least a portion of the stack 220 of items 202 representing a sub-set of the second nodes to be automatically replaced by a replacement line 210 of items 202, spread in a direction parallel to the second direction and representing the sub-set of the second nodes wherein each node of the sub-set of the second nodes has a corresponding item in the replacement line 210 of items 202. This is potentially useful if the stack of items is quite deep, and the user only wants to unstack into a line a sub-set of the stack of items.

In other examples, a stack of items can be unstacked into a line 210 of items 202 by clicking on an interactive element in the leading item 202 of a stack of items. The leading item 202 of the stack 220 of items corresponds to, for example, an apex second node 102A. Clicking the interactive element expands the stack of items.

In some examples, when a stack of items is unstacked to produce a line 210 of items 202, the visual representation 200 is automatically rescaled so that a whole or a significant portion of the line 210 of items 202 is visible to the user.

The apparatus 10 can also enable the user to select an item 202 and cause display of at least some of the data accessible via the node 102 represented by the selected item 202. This selection may also cause display of one or more options for using the data accessible via the node 102 represented by the selected item 202 to perform one or more functions.

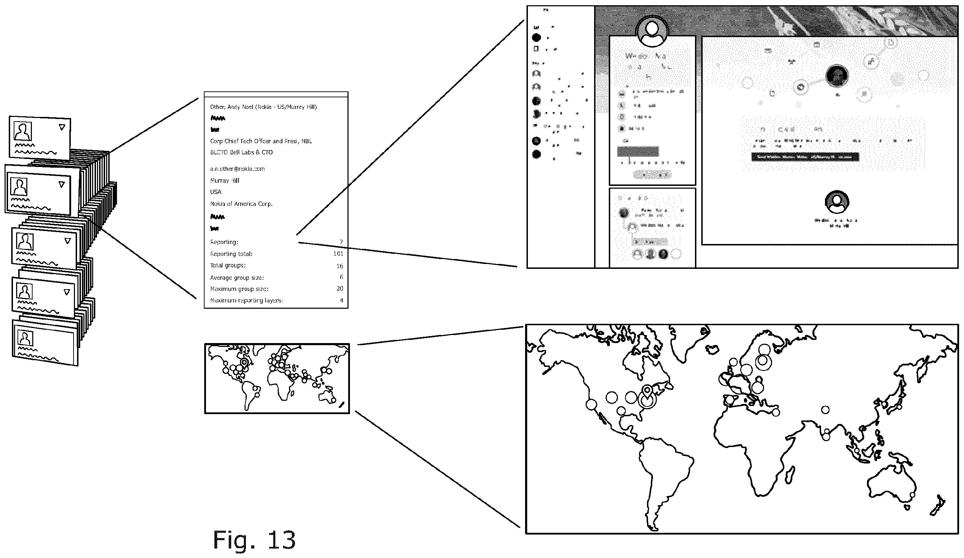

For example as illustrated in FIG 13, selecting an item 202 produces a command and control menu that allows the user to command and control the apparatus 10 using data that is accessible via the node 102 represented by the selected item 202. The associated node acts as an access point to data and that data is used to change the visual representation 200 to provide a command and control menu for using the access data.

The command and control menu can enable task performance beyond looking up data and facilitates a particular function. For example, the command and control menu can enable communication with a user associated with the selected item 202. In some examples, the command and control menu can enable a user of the visual representation 200 to select a communication channel to communicate with the user associated with the selected item 202. For example, the user of the visual representation 200 may be able to select a communication type such as e-mail, telephone call, video call, message, etc.

In some, but not necessarily all examples, the command and control menu can enable the user of the visual representation 200 by selecting a menu entry to use the data accessible via the node represented by the selected item 202 to automatically populate a recipient field of a communication, for example, a message or an e-mail or a telephone call.

FIG 13 illustrates another example of the use of the command and control menu. It illustrates that not only data associated with the node that corresponds to the selected item 202 is obtainable but data can be obtained that relates to nodes interconnected to the selected node in the graph 100. For example, in FIG 13, the selected item 202 is associated with an apex second node 102_{A} for a manager who manages persons who are represented in the graph by dependent nodes 102. In FIG 13, a map is illustrated that represents the locations of the persons that the manager manages. Each of the locations in the map may be an interactive element, the selection of which can enable communication with a particular person.

In some, but not necessarily all examples, the apparatus 10 can enable a user of the visual representation 200 to display at least some of the data associated with a first node represented by an item in the line 210 of items 202 without selecting the item. For example, the user may hover a cursor over an item 202 to cause the display of data that is additional to data displayed in the item 202. In some examples a command and control menu may additionally be displayed by this action.

In some, but not necessarily all examples, the apparatus 10 is configured to enable the user of the visual representation 200 to access data that is a different collection of data than the data set 30. This other data may, for example, be data that is stored on the apparatus 10. For example, it may be personal databases of the user of the visual representation 200 or may be documents or other data structures stored in the memory 420 of the apparatus 10. In this example, the other data may be used as one or more search criteria to identify nodes 102 that are access points to data in the data set 30 that matches the other data and to adapt the visual representation 200 to visually flag or mark an item 202 representing the identified node 102.

In this way, if I store on my computer an academic paper that has been prepared by a certain individual, and that individual is represented by an item 202 in the visual representation 200 then that item 202 may have a visual marker applied to it so that it is identifiable by the user of the visual representation 200. In addition, this association between the identified item 202 and the other data can, for example, be accessed by selecting the item 202 or by hovering a cursor over the item 202. For example, a user selectable hyperlink may be provided to the other data.

Thus the apparatus 10 is configured to enable a user of the visual representation 200 to select a visually flagged item 202 within a stack 220 of items 202 and cause display of at least some of the other data matching the data accessible via the node 102 represented by the visually flagged item 202.

It should be appreciated from the foregoing that the data set that is processed may be a very large data set, or may be a very large portion of an extremely large data set. The visual representation 200 can enable a user to visualize a very large data set that may, for example, be represented by a graph 100 with more than 1000 nodes. In the examples illustrated in FIG 2 and 3, the graph 100 is a directed acyclic graph, and more particularly is a directed acyclic routed tree graph.

The visual representation 200 is a graphical user interface and the items 202 are graphical objects within the graphical user interface.

Referring to the previous examples, in some examples, the items 202 within a stack 220 of items 202 are ordered, for example, in alphabetical order. Likewise in some examples, the items 202 in a line 210 of items 202 are ordered alphabetically, for example.

In some, but not necessarily all examples, if the total number of items in a line 210 of items is so large that it is not easily displayable, then the visual representation 200 may be adapted. For example, instead of displaying the nodes as a line of nodes it may instead be displayed as a different type of item that is recognizable to a user as a reduced line of items. In other examples the scale of the visual representation 200 may first be adjusted before the reduction of the line of items occurs.

Referring back to FIG 1, the apparatus 10 comprises means for receiving input of one or more search criterion 20. In some but not necessarily all examples, the means for receiving input is a means for receiving user-input of one or more search criterion 20. In the example of FIG 9A, a user input device 424 is configured to enable a user to input the one or more search criterion 30.

In some but not necessarily all examples, the means for receiving input of one or more search criterion 20 comprises means for inputting content. The content may be text, image or audio. It may have been created for a purpose other than or in addition to extraction of an identifier.

In some but not necessarily all examples, the means for receiving input of one or more search criterion 20 comprises means for inputting unstructured text. The apparatus 10 comprises means for extracting one or more identifiers from the unstructured text as the one or more search criterion. For example, the processor 410 can extract one or more identifiers from the unstructured text and use them as the one or more search criterion 20.

In at least some examples, the one or more search criterion 20 is independent of metadata.

In some examples, the unstructured text is freeform text. It is unstructured in the sense that it is a single field of multiword user-determined natural language text rather than multiple standard database fields of simple text or metadata.

In some but not necessarily all examples, the unstructured text is created by a person for a purpose other than or in addition to extraction of an identifier.

An identifier is a string that is present in the data set. In some but not necessarily all examples, an identifier can also be a string that has a corresponding string in the data set. Corresponding in this sense means that the identifier and the data set string are considered, for example by machine learning or deterministic programming, to be the same even though they are not identical. One or more nodes 102 provide an access point to the string in the database. The identifier is consequently associated with at least one node 102.

In some but not necessarily all examples, the apparatus 10 is configured to parse the unstructured text. For example, parsing may separate a sentence or a paragraph into distinct word strings. The parsed unstructured text is then processed to determine identifiers as the search criterion or criteria. This may be achieved, for example, by using a deterministic look-up within the data set or using a trained machine learning model.

Each identifier defines a sub-set of one or more nodes 102. In some examples there is a one-to-one correspondence between an identifier and a node 102 (item 202).

Where multiple distinct identifiers are extracted from the unstructured text they may be used as an OR-combination in a search criterion.

Referring back to the example of FIG 9A, a user input device 424 is configured to enable a user to drag-and-drop or cut-and-paste or otherwise select the unstructured text or an object defining the unstructured text.

For example, the unstructured text may be a displayed text body of an email. The user uses the user input device 424 to select all or some of the displayed text in the body of the email. This selection causes input of the selected unstructured text and it is used to determine one or more search criterion.

In another example, the email may be represented by an icon or other object and the text body of the email is not displayed. The user uses the user input device 424 to select the email icon or other object and this selects all (or some) of the content of the email including all of the email text body as input unstructured text that determines one or more search criterion.

Unstructured text can be emails as object/icon (or text from emails) and any other content or document like slides from a presentation, spreadsheets, even images in which text can be recognized, text messages, webpages, social media posts, etc...

In some but not necessarily all examples, the apparatus comprises means for storing identifiers of the first nodes as anchor points for reproducing the two-dimensional representation. Referring to FIG 9A, the anchor points may be stored in the memory 420.

Where a structural feature has been described, it may be replaced by means for performing one or more of the functions of the structural feature whether that function or those functions are explicitly or implicitly described.

In some but not necessarily all examples, the apparatus 10 is configured to communicate data from the apparatus 10 with or without local storage of the data in a memory 420 at the apparatus 10 and with or without local processing of the data by circuitry or processors at the apparatus 10.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long range cellular radio links. The apparatus may comprise a communications interface such as, for example, a radio transceiver for communication of data.

The apparatus 10 may be part of the Internet of Things forming part of a larger, distributed network.

The processing of the data, whether local or remote, may be for the purpose of health monitoring, data aggregation, patient monitoring, vital signs monitoring or other purposes.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 10 where it may produce an output sensible to the subject such as an audio output, visual output or haptic output.

The above described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
receiving input of one or more search criterion;
processing a data set based on the received input one or more search criterion
wherein the data set is a set of data accessible via a graph comprising nodes including a root node, wherein a hierarchical level of a node is determined by a number of nodes in a shortest route through the graph from the node to the root node and is highest at the root node, and
wherein the processing classifies nodes, based on the received input one or more search criterion, as first nodes or second nodes
wherein the first nodes are access points to data that is determined to be a search match for the received input one or more search criterion and
wherein the second nodes are access points to data, are not first nodes and have a same or higher hierarchical level as a first node;
causing display of a user-interactive visual representation of the data set wherein the user-interactive visual representation of the data set is a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels,
wherein the three-dimensional structure, for each hierarchical level:
uses at least a line of one or more items, in the corresponding layer, to represent first nodes that are in the hierarchical level, wherein the line of items is spread within the corresponding layer in a direction parallel to the second direction, wherein each of the first nodes that are in the hierarchical level has a corresponding item in the line of items,
uses at least a stack of items, in the corresponding layer, to represent second nodes that are in the hierarchical level wherein the stack of items are items stacked within the corresponding layer in a stacking direction parallel to the third direction; and wherein there is an item and/or a stack of items at each node in a shortest route through the graph from each first node to the root node.

2. An apparatus as claimed in claim 1, wherein the means for receiving input of one or more search criterion comprises means for inputting unstructured text comprising one or more identifiers present in the data set and associated with nodes, and means for extracting the one or more identifiers from the unstructured text and using them as the one or more search criterion.

3. An apparatus as claimed in claim 2, wherein the means for inputting unstructured text enables a user to drag-and-drop or cut-and-paste the unstructured text or an object defining the unstructured text.

4. An apparatus as claimed in claim 1, 2 or 3, wherein the apparatus comprises means for storing identifiers of the first nodes as anchor points for reproducing the two-dimensional representation.

5. An apparatus as claimed in any preceding claim, comprising means for controlling the two-dimensional representation of the three-dimensional structure so that the three-dimensional structure is rotated in space.

6. An apparatus as claimed in any preceding claim, comprising means for enabling a user to convert a stack of items stacked in the third direction to a line of items spread in a direction parallel to the second direction, and for enabling the user to covert the line of items back into the stack of items.

7. An apparatus as claimed in any preceding claim, comprising means for enabling a user to select an item and cause display of at least some of the data accessible via the node represented by the selected item and display of one or more options for using the data accessible via the node represented by the selected item to perform one or more functions.

8. An apparatus as claimed in any claim 7 comprising means for using the data accessible via the node represented by the selected item to automatically populate a recipient field of an email.

9. An apparatus as claimed in claim 7 or 8, comprising means for enabling a user to display at least some of the data associated with a first node represented by an item in the line of items without selecting the item.

10. An apparatus as claimed in any preceding claim, comprising means for:
accessing other data that is a different collection of data than the data set;
identifying nodes that are access points to data that matches the other data; and
visually flagging an item representing the identified node.

11. An apparatus as claimed in claim 10, comprising means for enabling a user to select a visually flagged item within a stack of items and cause display of at least some of the other data matching
the data accessible via the node represented by the visually flagged item.

12. An apparatus as claimed in any preceding claim, wherein each item is a two-dimensional item that extends parallel to the first direction and the second direction but does not extend or extend significantly parallel to the third direction.

13. An apparatus as claimed in any preceding, wherein the item is a two-dimensional rectangular card that has first parallel edges that are parallel to the first direction, second parallel edges that are parallel to the second direction and corners where the first parallel edges and the second parallel edges meet, wherein the stacked items are a stack of the cards viewed from a perspective such that corners of the cards in the stack are aligned parallel to the third direction.

14. A method comprising:
receiving input of one or more search criterion;
processing a data set based on the received input one or more search criterion wherein the data set is a set of data accessible via a graph comprising nodes including a root node, wherein a hierarchical level of a node is determined by a number of nodes in a shortest route through the graph from the node to the root node and is highest at the root node, and wherein the processing classifies nodes, based on the received input one or more search criterion, as first nodes or second nodes wherein the first nodes are access points to data that is determined to be a search match for the received input one or more search criterion and wherein the second nodes are access points to data that are not first nodes and which have a same or higher hierarchical level as a first node;
causing display of a user-interactive visual representation of the data set wherein the user-interactive visual representation of the data set is a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels,
wherein the three-dimensional structure, for each hierarchical level:
uses a line of one or more items, in the corresponding layer, to represent first nodes that are in the hierarchical level, wherein the line of items is spread within the corresponding layer in a direction parallel to the second direction, wherein each of the first nodes that are in the hierarchical level has a corresponding item in the line of items,
uses at least a stack of items, in the corresponding layer, to represent second nodes that are in the hierarchical level wherein the stack of items are items stacked within the corresponding layer in a stacking direction parallel to the third direction; and
wherein there is an item or a stack of items at each node in a shortest route through the graph from each first node to the root node.

15. A computer program comprising program instructions for causing an apparatus to perform at least the following:
receiving input of one or more search criterion;
processing a data set based on the received input one or more search criterion
wherein the data set is a set of data accessible via a graph comprising nodes including a root node, wherein a hierarchical level of a node is determined by a number of nodes in a shortest route through the graph from the node to the root node and is highest at the root node, and
wherein the processing classifies nodes, based on the received input one or more search criterion, as first nodes or second nodes
wherein the first nodes are access points to data that is determined to be a search match for the received input one or more search criterion and
wherein the second nodes are access points to data that are not first nodes and which have a same or higher hierarchical level as a first node;
causing display of a user-interactive visual representation of the data set wherein the user-interactive visual representation of the data set is a two-dimensional representation of a three-dimensional structure that extends in first, second and third mutually orthogonal directions, and has a series of adjacent layers, each layer corresponding to a hierarchical level of the graph, wherein an ordering of the series of adjacent layers is in the first direction and corresponds to an ordering of the hierarchical levels,
wherein the three-dimensional structure, for each hierarchical level:
uses at least a line of one or more items, in the corresponding layer, to represent first nodes that are in the hierarchical level, wherein the line of items is spread within the corresponding layer in a direction parallel to the second direction, wherein each of the first nodes that are in the hierarchical level has a corresponding item in the line of items,
uses at least a stack of items, in the corresponding layer, to represent second nodes that are in the hierarchical level wherein the stack of items are items stacked within the corresponding layer in a stacking direction parallel to the third direction; and wherein there is an item and/or a stack of items at each node in a shortest route through the graph from each first node to the root node.
